# EUROPEAN PATENT APPLICATION

(11) **EP 4 163 101 A1**
(43) Date of publication of application: **12.04.2023**
(21) Application number: 21201256.1
(22) Date of filing: 06.10.2021
(51) Int. Cl.: B32B 1/02, B32B 7/027, B32B 7/12, B32B 15/08, B32B 15/20, B32B 27/06, B65D 81/34

(54) **A LAMINATED ALUMINIUM FOOD TRAY**

(71) Applicant: Danapak Flexibles A/S, 4200 Slagelse (DK)
(72) Inventor: FOGTMANN, Torben, 4200 Slagelse (DK); HYLDGAARD, Mikkel Wiggers, 4200 Slagelse (DK)
(74) Representative: AWA Denmark A/S

(57) **Abstract**

The present disclosure relates to food trays for being heated in an oven, manufactured from a laminate film comprising an aluminium foil, an adhesive layer and a polymer film. In further aspects, the present disclosure relates to laminate films and uses thereof for food trays as well as methods of manufacture of the food trays and laminate films.

## Description

The present disclosure relates, in a first aspect, to a food tray for being heated in an oven, said food tray being manufactured from a laminate film comprising an aluminium foil, an adhesive layer and a polymer film.

This disclosure relates, in further aspects, to a laminate film and the use thereof for manufacturing a food tray according to the first aspect of this disclosure. In further aspects, this disclosure relates to methods of manufacture of said food tray and laminate film.

A range of food trays intended for heating of foodstuffs contained therein in an oven are known from the prior art.

Typically, such food trays are made of rigid aluminium. Aluminium based ovenable food trays find different uses, ranging from pate trays, where a product with a high salt concentration is baked at a manufacturer before being shipped and sold in a refrigerated state in e.g. a supermarket, to food trays used in the airline industry, where portion packed foods are rapidly heated on the plane and served in the food tray directly afterwards. Here also, lids are typically made from aluminium, the lids often having a small pre-fold so that they can be snapped to close an opening of the food trays to avoid drying out the food during heating.

Another usage of food trays is for ready-to-cook meat, where, for instance, marinated raw chicken is MAP (modified atmosphere) packed in an aluminium food tray with a barrier foil sealing an opening of the food tray. At the end customer, the sealing foil is removed, and the chicken is cooked directly from the tray in the oven.

Today's product range of aluminium food trays employs aluminium foils typically ranging in thicknesses from 37 to 200 µm depending on the intended usage as a lid, a folded tray or a smooth, drawn tray, and also depending on the size of the food tray or lid. The larger the size, the thicker the needed foil since such food trays are usually required to be self-supporting so at to substantially not deform during the intended use thereof.

The human body excretes small amounts of aluminium very efficiently, and the World Health Organisation has established a safe daily intake of 40 mg per kilogram of body weight per day. Studies have suggested, however, that a high aluminium intake reduces the growth rate of human brain cells and may be harmful to some patients with bone diseases or renal impairment. Pots and other cookware of aluminium tend to be oxidised during use, providing an inert layer that prevents the aluminium from leaching into food, but there is concern that the migration of aluminium from aluminium foil into food, especially acidic food at high temperatures, may occur at a level above the permissible limit set by the WHO.

This is why present ovenable aluminium trays are often provided with an epoxy-based high-temperature curing lacquer as a protective layer on the inner side of the tray facing the food to be packed and/or cooked. Besides this, high temperature curing is also often used for curing of decorative ink on the tray.

Said type of lacquer needs a peak metal temperature, i.e. the highest temperature that the aluminium reaches in the oven, that exceeds a certain level, ranging from 160 °C in the low end to above 240 °C in the high end. In order to achieve this in a lacquering or printing process, large ovens 3-4 floors in size are heated to well above the target temperature, which consumes a considerable amount of energy, and also the coating speed is quite slow (approximately 50 m/min) compared to processes, where such heat processing is not needed, such as flexible foils (300-500 m/min), in order to make sure that the aluminium reaches the desired peak metal temperature. In general, 80 µm aluminium needs to stay in an oven at a determined temperature setpoint for at least 30 seconds in order to reach the oven temperature. That means that for each meter/min to be run, 0.5 meter of oven heated to +200 °C is needed, and with a large air substitution due to solvents being removed from the coating/lacquer.

Besides being expensive and very energy heavy due to stoving during production, the employed epoxy lacquers often contain harmful chemicals like bisphenols, which will be in direct contact with the food contained in the tray.

In view of the above, one object of the present disclosure is to provide food trays suitable for heating of food, said food trays requiring only a moderate expenditure of energy for its production, and/or which food trays do not show the adverse health effects of prior art trays during heating as outlined in the above. Another object is that such food trays should be more cost efficient in terms of material use and production.

To meet one or more of the above and/or other objects, a food tray for being heated in an oven is provided in a first aspect of the present disclosure, said food tray comprising a bottom wall and a number of side walls defining a spacing for a foodstuff product, wherein the food tray is manufactured from a laminate film, said laminate film comprising, in sequence, an aluminium foil, an adhesive layer, and a polymer film, wherein the aluminium foil comprises, consists of or essentially consists of aluminium, wherein the polymer film comprises, consists of, or essentially consists of a thermoplastic polymer having a melting point of at least 150 °C, wherein the adhesive layer comprises, consists of, or essentially consists of an adhesive, and wherein the polymer film has been adhesive laminated with the aluminium foil by means of the adhesive layer so that the polymer film adheres to the aluminium foil.

It has surprisingly been found that laminate films according to the present disclosure provide suitable flexibility and lamination strength for being used for food trays. Despite the fact that such laminate films comprise three or more layers and three or more different materials, they show excellent workability.

Hereby, laminate films of the present disclosure can provide a robust, non-hazardous, and cost-effective food tray suitable for being heated in an oven. Such laminate films can be produced in shorter time and with smaller consumption of energy compared to known food trays for being heated in an oven. A further advantage of such laminate films is that application of safe and versatile ornamentation, e.g. as design or full-tone print, or information on the tray can be made possible by prior, optionally mirror-inverted, print on the face of the polymer film facing the adhesive layer and the aluminium foil. If the polymer film is transparent, the ornamentation or information may then be visible from the outside of the food tray.

"A thermoplastic polymer" may be defined as a plastic polymer material that becomes pliable or mouldable at a certain elevated temperature and solidifies upon cooling. The polymer chains associate by intermolecular forces, which weaken with increased temperature. The thermoplastic polymer may comprise at least 20, 30, 40, 50, 60, 70, 80, 90, 95, 98 or 99 % (w/w) of the polymer film.

An "adhesive", may be defined as a non-metallic substance applied to one or both surfaces of two separate items that binds them together and resists their separation. An adhesive can also be denoted "glue". The adhesive may comprise at least 20, 30, 40, 50, 60, 70, 80, 95, 98 or 99 % (w/w) of the adhesive layer.

The polymer film can be a heat resistant film. In terms of the polymer layer, a heat resistant film may be defined as a film showing a melting temperature of at least 150, 160, 170, 180, 190, or 200 °C. Similarly, the adhesive layer can be a heat resistant adhesive layer, which may involve that the adhesive layer substantially maintains its adhering properties when heated to a temperature of at least 150, 160, 170, 180, 190, or 200 °C for at least 30 minutes.

In the food trays according to the present disclosure, the bottom wall and the side walls may define a top opening positioned opposite the bottom wall, wherein the top opening can be covered with a separate lid, which can optionally be snappable onto the food tray. Alternatively, such top opening can be covered with a sealing film. The present disclosure also includes a set of parts comprising a food tray according to any one of the embodiments according to the present disclosure and such a lid or sealing film.

The food trays according to the present disclosure can comprise three, four, or more side walls. If comprising four side walls, the food tray may have a substantially parallelepipedal shape. Generally, corners between the side walls may or may not be rounded and/or may or may not comprise folds. The side walls may each be substantially straight and/or may be inclined outwardly towards a top opening of the food tray. A rim of the side walls around a top opening of the food tray may be folded outwardly or inwardly, optionally so as to provide a rim suitable for a separate lid to be snappable thereto.

The food trays and the laminate films according to the present disclosure as well as any layers and materials thereof can be ovenable. For instance, the aluminium foil, the polymer film, and the adhesive layer can be ovenable. "Ovenable" may be defined as suitable for being heated in an oven and/or being able to sustain an oven temperature of at least 150 °C for at least 30 minutes without significant deterioration of physical and/or chemical properties and/or suitability for intended use; for instance, no significant delamination, deformation, discolouration or disintegration occurs.

The food trays and laminate films of the present disclosure may be able to sustain an oven temperature of 150 °C for 60 minutes, 90 minutes, 120 minutes, or more; or an oven temperature of 200 °C or more for 30 minutes, 60 minutes, 90 minutes, 120 minutes, or more.

In the above-cited instances, a chamber of an oven in which such test is carried out may be subjected to substantially no external pressure beyond its ambient atmospheric pressure.

Further, the food trays and laminate films of the present disclosure may be able to withstand humidity conditions, wherein the oven chamber is provided with moisture in excess of that originating from the humidity of the ambient air and from any foodstuff in the spacing of the food tray or being in contact with the laminate film.

"Adhesive lamination" as the term is used herein is a well-known process of laminating films to each other. This process can involve a production line equipped with rollers to hold lengths of the aluminium foil and of the polymer film. The polymer film can be selected to be as thin as possible to save material and to enable recycling of used trays and film laminates as aluminium. The adhesive is added evenly to the surface of either the foil or the polymer film or to both of these surfaces, after which the foil and the polymer film are pressed together to let the adhesive cure and produce the laminate film. The foil and the polymer film may be pressed together by combining or nip rolls, which may be heated, cooled or neither heated nor cooled.

Thus, "adhesive lamination" as this term is used in the present disclosure is not "extrusion lamination" and is not "extrusion coating" or "coextrusion coating" according to the understanding of these terms of a person skilled in the art. Correspondingly, the polymer layer of the laminate films of the present disclosure is not "extrusion laminated", "extrusion coated", or "coextrusion coated" on the aluminum film, and the adhesive of the adhesive layers of the present disclosure does not form an "extrusion lamination tie layer" or a "coextrusion coating tie layer" of the laminate film. Thus, the adhesive layer according to the present disclosure is not applied by applying an extruded melt of the adhesive.

The adhesive layer and/or the polymer film may or may not completely or substantially completely cover one or both major surfaces, such as an inner and/or an outer surface, of the aluminium foil and/or of the bottom wall and/or one or more or all side walls of the food tray.

Ink, colour or print for decorative or informative purposes may be applied, optionally laterally reversed, to the surface of the polymer film facing the layer of adhesive. Alternatively, ink, colour or print for decorative or informative purposes may be applied to the surface of the polymer film not facing the layer of adhesive.

Further, ink or print for decorative or informative purposes may be applied to one or both faces of the aluminium foil before adhesive lamination. Likewise, text, symbols and/or ornaments may be embossed into or punched out of the aluminium foil before or after adhesive lamination.

The polymer film may be a cast or an extrusion cast, such as a coextrusion cast, polymer film. During or following the process of casting or extrusion casting, the polymer film may be mono- or biaxially oriented.

The laminate films of the present disclosure may comprise only a single polymer film or, alternatively, more than a one, such as two, three, or four polymer films, which may be of the same or different materials and/or may have the same or different thicknesses and/or may be adhered or otherwise attached to each other, such as by adhesive lamination or coextrusion, and/or may each consist of one single polymer layer or may comprise two or more sub-layers that may similarly be adhered or otherwise attached to each other, such as by adhesive lamination or coextrusion.

The food trays and laminate films of the present disclosure may consist of three layers only, i.e. the aluminium foil, the adhesive layer, and the polymer film, wherein the adhesive layer and the polymer film may be applied either on the inner surface face of the aluminium foil or on the outer surface of the aluminium foil, or such a layer structure may be applied on both of these surfaces. When applied on the outer surface of the aluminium foil, the aluminium foil may directly contact a foodstuff product provided in the spacing.

The side walls of the food trays according to the present disclosure may be substantially vertical or may be inclined, such as by an outwards inclination towards a top opening of the tray of 10, 20, 30, 40, 50, or 60°. The side walls may have any suitable shape, such as plane or curved.

The food trays may take on any relative dimensions and shapes compatible with their use as food trays. For instance, the bottom wall thereof may be substantially rectangular, hexagonal, circular, oval, elliptic, or superelliptic. Any corners present may be more or less rounded.

The side walls of the food trays of the present disclosure may have a height providing a depth of the food tray of more than 1, 1.5, 2, 3, 4, or 5 cm. Additionally or alternatively, the bottom wall may be plane in its full extension and/or may be provided with ridges and/or depressions for separating various items such as different dishes such as the first and second course of a meal, or for drainage of humidity leaked during heating of the food contained in the food tray.

The food trays of the present disclosure, possibly in the form of a drawn tray, may be provided with a an upper edge extending in a plane so that a lid can be sealed to said edge by snapping or by applying heat or an adhesive. The lid may be in the form of a sealing or barrier foil.

Alternatively, the food trays of the present disclosure, possibly in the form of a folded tray, may be provided with a recessed rim to be fitted with and/or bent over the periphery of a rigid or semi-rigid lid throughout the full extension of said periphery or only at certain points thereof. A recessed rim of a food tray may comprise a rim part, which has been bended relative to the side walls of the tray, and said rim part may have been adapted for engagement with a snap lock of a lid. Alternatively or additionally, said rim part may be adapted to serve as a ledge for supporting an outer edge of a lid resting on said ledge. In the latter case, an adjacent rim part may be folded over said lid edge throughout its full extension or only at certain points thereof to affix the lid.

The food trays of the present disclosure, either drawn or folded, may also or may alternatively be adapted for snap-locking a lid thereto so that a snap lock engages an upper rim or edge of the food tray.

Depending on its type and means of attachment to the food tray, such lids may be manufactured from various materials. In some instances, such lids may be prepared from the same laminate film as the tray.

According to an embodiment, the polymer film is a polyester film, such as a polyethylene terephthalate film or a polybutylene terephthalate film, or is a polyamide film, a polyethylene naphthalate (PEN) film, a polyimide film, a thermoplastic copolyester (TPC) film, or a polymethylpentene (PMP) film.

In one embodiment, the aluminium film comprises an inner surface facing said spacing and an outer surface facing the surroundings, and wherein the adhesive layer and the polymer film are provided at or on the inner surface of the aluminium foil so that the polymer film is positioned closer to the spacing than the aluminium foil.

In this case, the polymer film may directly contact a foodstuff product contained in the spacing of the food tray. Alternatively, one or more additional film layers may be attached to a surface of the polymer film facing the spacing.

In an alternative embodiment, the aluminium film comprises an inner surface facing said spacing and an outer surface facing the surroundings, and wherein the adhesive layer and the polymer film are provided at or on the outer surface of the aluminium foil so that the polymer film is positioned farther from the spacing than the aluminium foil.

In this and other cases, the aluminium foil may directly contact the foodstuff product.

In one embodiment, the food tray has been cold-formed to a shape of the food tray. The food tray may be a folded food tray or may be a non-folded, drawn food tray.

The tray may be prepared by forcing the laminate film into a mould or folding it around a die to produce a tray with wrinkles or folds, typically at or especially at corners of the food tray. During folding, the laminate film may be subjected to a stretch of approximately 2-6 %, such as 3-5 %, meaning that annealed as well as partially annealed aluminium, and potentially also non-annealed aluminium, will be usable. To form the folded tray, the laminate film may be forced into a shaped die cavity. By mechanical pressure and/or air pressure, a tray with a spacing, a bottom wall and side walls is formed, and surplus material arranges itself in the form of characteristic folds or wrinkles in the corners of the tray. A recessed rim to fit with a lid may also be a feature of the tray produced as the laminate film is pressed into a shaped die.

Alternatively, the food tray may be manufactured by sheet drawing of the laminate film, whereby the film is stretched to become thinner and achieve the desired shape by plastic deformation, so that a tray with a smooth surface or only inconspicuous wrinkles or folds may be obtained. During drawing, the laminate film will be subjected to a stretch of approximately 15-25 %, such as 19-21 %, putting demands on both the aluminium foil, the layer of adhesive and the polymer film in terms of flexibility. To form a drawn tray, the laminate film is pulled over a die and stretched to take on its form. The flow of material is controlled through pressure applied to the laminate film and lubrication applied to the die or the laminate film. If the laminate film moves too easily, wrinkles will occur in the tray. On the other hand, if too much pressure is applied, the laminate will be stretched too thin and/or will break.

The final drawn tray may present a spacing, a bottom wall, and side walls. It may possess a substantially smooth surface. Substantially no or only inconspicuous folds or wrinkles may be present in the corners. The tray may be provided with an upper edge extending in a plane so that a lid can be sealed to said edge by snapping or by applying heat or an adhesive.

In some cases, the aluminium foil comprised in the laminate films of the present disclosure may have a thickness of 20-250 µm, 35-200 µm, or 70-90 µm. The aluminium foil may have a thickness of more than 20 µm, 30 µm, 40 µm, 50 µm, 60 µm, 70 µm, or 80 µm, and/or less than 250 µm, 200 µm, 150 µm, 140 µm, 130 µm, 120 µm, 110 µm, 100 µm, or 90 µm. The aluminium is optionally annealed, partially annealed or non-annealed. The aluminium foil may be manufactured by continuously casting and cold rolling, whereby the aluminium becomes work hardened during the cold rolling process. To restore the work hardened aluminium material to a more soft and ductile condition it may be annealed or partially annealed, entailing heating the material above its recrystallization temperature, maintaining a suitable temperature for an appropriate amount of time, and, finally, cooling.

Chemical degreasing of partially annealed aluminium may be performed to promote adhesion of the other constituents of the laminate film to the aluminium foil.

The aluminium foil may consist or substantially consist of aluminium in substantially pure form or may consist of an alloy, wherein aluminium enters in a proportion of at least 90 % (w/w), 91 %, 92 %, 93 %, 94 %, 95 %, 96 %, 97 %, 98 %, or 99 %. Among other elements, silicon may enter into the alloy in a proportion of 0.5 % (w/w) or less, such as 0.4 % or less; iron may enter into the alloy in a proportion of 2.5 % (w/w) or less, such as 2.0 % or less, such as 1.2-2.0 %, or 0.8 % or less; copper may enter into the alloy in a proportion of 0.5 % (w/w) or less, such as 0.3 % or less, such as 0.1 % or less; manganese may enter into the alloy in a proportion of 1.2 % (w/w) or less, such as 1.0 % or less, such as 0.3-1.0 %, 0.8 % or less, such as 0.4-0.8 %; magnesium may enter into the alloy in a proportion of 1.5 % (w/w) or less, such as 1.3 % or less, such as 0.8-1.3 %, or 0.1 % or less; chromium may enter into the alloy in a proportion of 0.5 % (w/w) or less, such as 0.1 % or less; zinc may enter into the alloy in a proportion of 0.5 % (w/w) or less, such as 0.25 % or less, such as 0.1 % or less; titanium may enter into the alloy in a proportion of 0.5 % (w/w) or less, such as 0.1 % or less.

In one embodiment, a partially annealed aluminium alloy (such as e.g. Hydro 8006 in strain-hardened and partially annealed temper, H24) is employed for the laminate film, comprising by weight 0.3-0.5 % silicon, 1.2-2.0 % iron, 0.2-0.4 % copper, 0.3-1.0 % manganese, 0.05-0.15 % magnesium and 0.05-0.15 % zinc.

In another embodiment, an annealed aluminium alloy of H0 temper (such as e.g. EN-AW 5006) at a foil thickness of 78-80 µm is employed, comprising by weight ≤ 0.8 % iron, ≤ 0.4 % silicon, ≤ 0.1 % copper, 0.4-0.8 % manganese, 0.8-1.3 % magnesium, ≤ 0.1 % chromium, ≤ 0.25 % zinc and ≤ 0.1 % titanium.

The aluminium foil may constitute at least 50 %, 60 %, 70 %, 75 %, 80 %, 85 %, 90 %, or 95 % of an overall weight of the laminate film.

According to one embodiment, the polymer film is an oriented polyester film, such as biaxially-oriented polyethylene terephthalate (BoPET) film. The oriented polyester film may have a thickness of at least 2 µm, such as at least 3, 4, or 5 µm, and/or at most 19, 23, 30, 36 µm, or 50 µm, such as 2-50 µm, 6-12 µm, 7-11 µm, or 8-10 µm.

In one embodiment, the BoPET film has a thickness of 11-13 µm, and shows a tensile strength at break (ASTM D 882) of 235-245 N/mm² in the machine direction orientation (MD) and 255-265 N/mm² in the transverse direction orientation (TD). Further, it shows an elongation at break (ASTM D 882) of 120-160 % (MD) and 100-120 % (TD), respectively.

Alternatively, the polymer film is a non-oriented polyester film, such as a polybutylene terephthalate (PBTP) film, or is a polyamide film. Said PBTP film or polyamide film may have a thickness of at least 8 µm and/or at most 110 µm, such as 10-100 µm, 12-90 µm, 14-80 µm, 15-70 µm, 16-60 µm, 17-30 µm, 18-40 µm, or 20-30 µm, such as 21-29 µm, 22-28 µm, 23-27 µm, or 24-26 µm. The polyamide film may be a cast polyamide film of the type PA6.6 of a thickness of 24-26 µm, and may show an elongation at break (ISO 527) of 340-360 % (MD as well as TD) and a tensile stress at yield (ISO 527) of 34-36 N/mm² (MD) and 35-37 N/mm² (TD), respectively.

In one embodiment, polybutylene terephthalate (PBTP) at a thickness of 24-26 µm is used. It may show an elongation at break (ISO 527) of > 500 % (MD as well as TD), while its tensile strength (ISO 527) may amount to > 90 MPa (MD) and > 80 MPa (TD).

The polyester film or the polyamide film may have been corona-treated. By subjecting the film to a low temperature corona discharge plasma, changes in the properties of its surface are imparted, meaning that i.a. adhesion to adhesives and inks may be enhanced.

A 2-component adhesive may be used for the adhesive lamination. A 2-component adhesive is typically less dependent on moisture and temperature to cure than a 1-component adhesive. The 2-component adhesive may be applied in a grammage, including hardener, of at least 1 g/m² and/or at most 20 g/m^{2,} such as 1-10 g/m², 1-7 g/m², 1-6 g/m², 1-5 g/m², 1-4 g/m², 2-3 g/m², or 2.4-2.6 g/m². The adhesive may be added to the aluminium foil an/or the polymer film in an amount as small as possible. Said 2-component adhesive may be the only adhesive used for the adhesive lamination. The 2-component adhesive may be a polyurethane adhesive with an isocyanate hardener. The isocyanate may be an aliphatic or, preferentially, an aromatic isocyanate.

The adhesive may require a solvent or may be solventless. When making use of a solvent, the solvent, such as e.g. ethyl acetate, and the adhesive may be mixed in a specific ratio as specified by the manufacturer.

The base and hardener of the adhesive are mixed in a ratio of 5:1 to 25:1, preferably 8:1 to 15:1, calculated on solid content. The solvent is added to provide a viscosity in the range of 13 to 30 sec, such as 15 to 22 sec, such as around 17 - 18 sec as measured by DIN CUP 4, a method well known to the skilled person under the DIN 53211 standard.

In an embodiment, the tray is a folded tray, the aluminium foil is annealed or partially annealed, and the polymer film is or comprises an oriented or bi-oriented polyethylene terephthalate (PET) film. When the tray is prepared by folding, relatively less strict demands in terms of stretchability and malleability may be posed on the laminate film and its constituents than when the tray is manufactured by drawing. A less elastic and/or cheaper polymer film may therefore potentially be used, and the aluminium foil may not need to be annealed or may only need to be partially annealed. Alternatively, the aluminium foil is fully annealed.

According to an alternative embodiment, the tray is a drawn tray, the aluminium foil is annealed, and the polymer film is or comprises a polybutylene terephthalate (PBTB) film or a polyamide film.

In one embodiment, a second adhesive layer, which is optionally similar to the adhesive layer, and a second polymer film, which is optionally similar to the polymer film, are provided at the outer surface of the aluminium foil of the food tray, so that the second polymer film is adapted for being positioned farther from the foodstuff product than the aluminium foil. Said second adhesive layer and second polymer film may be provided in a second round of adhesive lamination.

Such an layer on an outer side of the tray may be applied for various purposes, for instance for protection of the surface and/or for enabling safe and/or versatile ornamentation, e.g. as design or full-tone print, or information on the outer side of the food tray by prior, optionally mirror-inverted, print on the face of the polymer film facing the layer of adhesive and the aluminium foil.

The polymer film and the adhesive layer provided at the outer surface of the aluminium foil, being positioned farther from the foodstuff product than the aluminium foil, may be of the same type as those applied at the inner surface of the aluminium foil, being positioned closer to the foodstuff product than the aluminium foil, or may be different.

A further aspect of the present invention provides a laminate film suitable for being formed, such as cold-formed, to a food tray as described in the above, said laminate film comprising, in sequence, an aluminium foil, an adhesive layer, and a polymer film, wherein the aluminium foil comprises, consists of or essentially consists of aluminium, wherein the polymer film comprises, consists of, or essentially consists of a thermoplastic polymer having a melting point of at least 150 °C, wherein the adhesive layer comprises, consists of, or essentially consists of an adhesive, and wherein the polymer film has been adhesive laminated with the aluminium foil by means of the adhesive layer so that the polymer film adheres to the aluminium foil.

The adhesive layer and the polymer film may be positioned closer to the foodstuff product than the aluminium foil or may be positioned farther from the foodstuff product than the aluminium foil.

Said laminate film may comprise any one or more of the features disclosed herein for the laminate film applied in the food trays as disclosed herein and may accordingly provide similar or identical advantages as those described herein for the food trays according to the present disclosure.

The laminate films of the present aspect may be ovenable and may in general possess, as applicable, one, more or all of the features of the different embodiments of the laminate films of the food tray as described in the above. The laminate films of the present aspect may, thus, be identical to the laminate films of the food trays according to the present disclosure as described above.

A further aspect of the present disclosure provides a use of a laminate film of the present disclosure for manufacture of a food tray, wherein the food tray is optionally as described in the above.

A further aspect of the present disclosure provides a method of manufacture of a food tray, the food tray being according to the present disclosure as described above, the method comprising manufacturing or otherwise providing the polymer film and, subsequently, adhesive laminating the polymer film to the aluminium foil by means of the adhesive layer.

In one embodiment, the method further comprises forming the manufactured laminate film to a shape of the food tray.

The method may further comprise applying a print to a surface of the polymer film before or after the adhesive lamination. Before the aluminium foil and the polymer film are joined together in the process of adhesive lamination, ink or print for decorative or informative purposes may be applied, optionally laterally reversed, to the face of the polymer film that will face the layer of adhesive in the final laminate film. Alternatively, the ink or print for decorative or informative purposes may be applied, before or after the aluminium foil and the polymer film are joined together, to the face of the polymer film that will not face the layer of adhesive in the final laminate film.

Further, ink or print for decorative or informative purposes may be applied to one or both faces of the aluminium foil before adhesive lamination. Likewise, text, symbols and/or ornaments may be embossed into or punched out of the aluminium foil before or after adhesive lamination.

A further aspect of the present disclosure provides a method of manufacture of a laminate film according to the present disclosure as described above, the method comprising manufacturing or otherwise providing the aluminium film, manufacturing or otherwise providing the polymer film, and adhesive laminating the polymer film to the aluminium foil by means of the adhesive layer.

The following detailed description discloses further non-limiting examples of embodiments with reference to the schematic drawings, in which:
Fig. 1 shows a cross-section of an embodiment of the laminate film comprising three layers.
Fig. 2 shows a cross-section of an embodiment of the laminate film comprising five layers.
Fig. 3 is a perspective view of an embodiment of the food tray prepared by folding.
Fig. 4 is a perspective view of an embodiment of the food tray prepared by drawing.

### Detailed description of embodiments

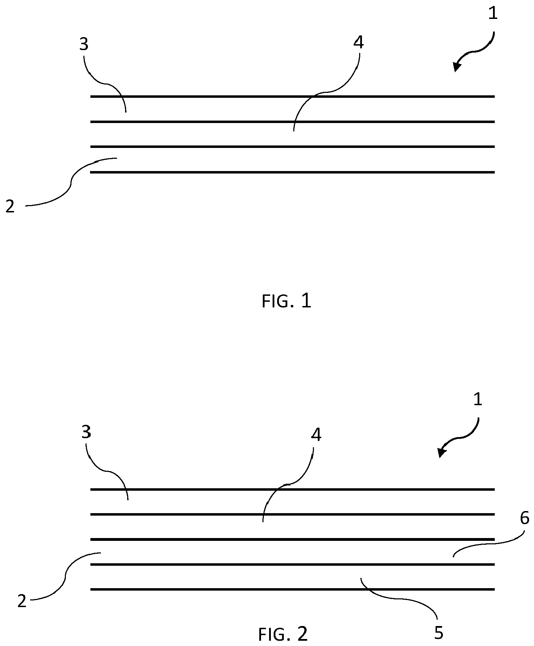

Fig. 1 shows the layer structure of a three-layer laminate film 1 according to an embodiment of the present disclosure. An aluminium foil 2 is overlayered by an adhesive layer 4, which is topped by a polymer film 3. When the laminate film 1 is used for a food tray, see further below, the upper surface of the polymer film 3 will be directed towards the inner cavity of the tray, i.e. the spacing, in which food may be contained.

The laminate 1 is produced by adhesive lamination, a procedure being well-known per se to the skilled person within the art. The production line is equipped with rollers to hold lengths of the aluminium foil and of the polymer film. The polymer film can be selected to be as thin as possible to save material and to enable recycling of used trays and film laminates as aluminium. The adhesive is added evenly to the surface of either the aluminium foil or the polymer film or to both of these surfaces, after which the foil and the film are pressed together to let the adhesive cure and produce the laminate film. The foil and the polymer film may be pressed together by combining or nip rolls, which may be heated, or which may not be heated.

The adhesive used for the adhesive lamination according to the present embodiment is a two-component polyurethane adhesive with an isocyanate hardener. It is added to the aluminium foil and/or the polymer film in an amount as small as possible; in the present embodiment at 2-3 g/m² including hardener.

In use, ethyl acetate as a solvent and the adhesive are mixed in a specific ratio as specified by the manufacturer. The base and hardener are mixed in a ratio of 5:1 to 25:1, preferably 8:1 to 15:1, calculated on solid content. The solvent is added to provide a viscosity in the range of 13 to 30 sec, such as 15 to 22 sec, such as around 17 - 18 sec as measured by DIN CUP 4, a method well known to the skilled person under the DIN 53211 standard.

Before the aluminium foil and the polymer film are joined together in the process of adhesive lamination, ink or print for decorative or informative purposes may be applied, optionally laterally reversed, to the face of the polymer film 3 that will face the layer of adhesive 4 in the final laminate film.

In Fig. 2, a further layer of adhesive 6 and a further polymer film 5 have been added to the laminate film 1 by a further round of adhesive lamination. The same type of adhesive and polymer film as in the layers 4 and 3, respectively, are applied in this embodiment for layers 6 and 5, but other types might have been used. These layers are attached to the lower face of the aluminium foil 2, and when the laminate film is used for a tray, they will be located on the outside of the tray. The lower face of the polymer film 5 will be directed towards the surroundings of the tray, thus facing away from the spacing, in which food may be contained.

For ornamental or informational purposes, colouring, decoration, or text, again possibly mirror-inverted, may be applied to the face of the polymer film 5 that will face the layer of adhesive 6 in the final laminate film.

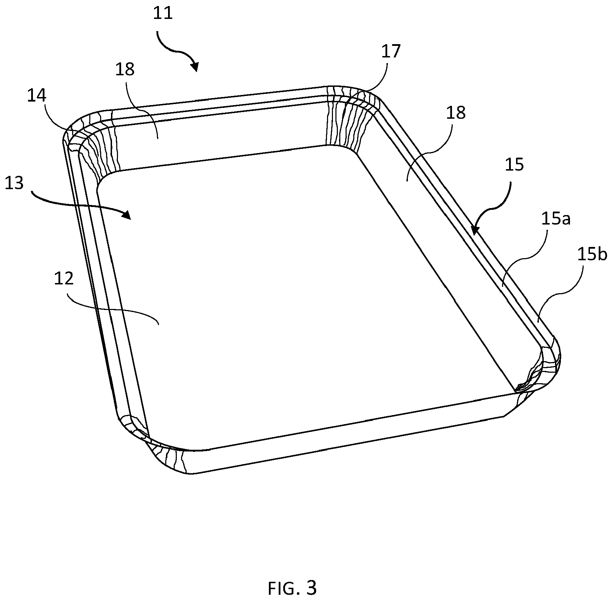

The preparation of a folded food tray 11 as depicted in Fig. 3 will now be described.

During folding, the laminate film 1 is subjected to a stretch of approximately 4 %, meaning that annealed as well as partially annealed aluminium will be usable. In the present embodiment, a partially annealed aluminium alloy (such as e.g. Hydro 8006 in strain-hardened and partially annealed temper, H24) is employed for the laminate film, comprising by weight 0.4 % silicon, 1.2-2.0 % iron, 0.3 % copper, 0.3-1.0 % manganese, 0.1 % magnesium and 0.1 % zinc. Chemical degreasing of the partially annealed aluminium may be necessary for sufficient adhesion of the other constituents of the laminate film to the aluminium foil.

Further, a biaxially-oriented polyethylene terephthalate (BoPET) film at a thickness of 12 µm is used for the laminate film. It shows a tensile strength at break (ASTM D 882) of 240 N/mm² in the machine direction orientation (MD) and 260 N/mm² in the transverse direction orientation (TD). Further, it shows an elongation at break (ASTM D 882) of 140 % (MD) and 110 % (TD), respectively.

To form the folded tray 11, the laminate film is forced into a shaped die cavity. By combined mechanical pressure and air pressure, a tray with a spacing 13, a bottom wall 12 and side walls 18 is formed, and surplus material arranges itself in the form of characteristic folds or wrinkles 17 in the corners 14 of the tray. As appears from Fig. 3, a recessed rim 15 to fit with a lid is also a feature of the tray produced as the laminate film is pressed into the shaped die in the present embodiment. The recessed rim 15 comprise rim parts 15a and 15b. Rim part 15a is bended relative to the side walls 18 and may be provided for engagement with a snap lock of a lid. Alternatively, rim part 15a may be provided as a ledge for supporting an outer edge of a lid resting on said ledge. In the latter case, rim part 15b may be folded over said lid edge throughout its full extension or only at certain points thereof to affix the lid.

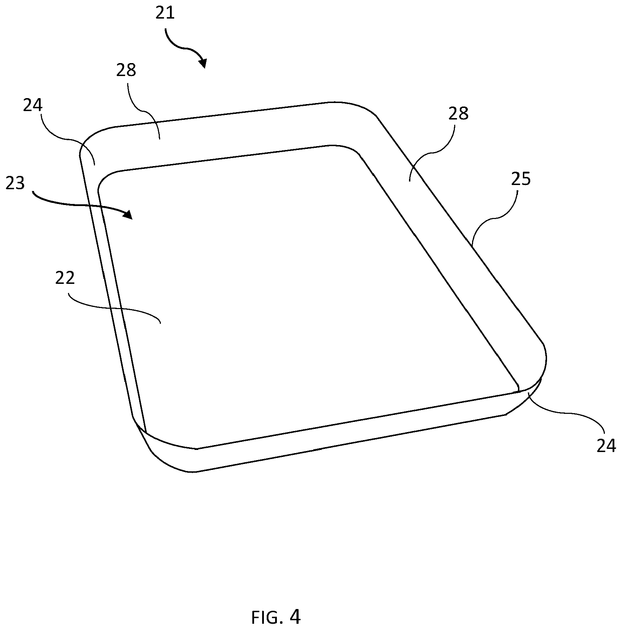

In the following, the preparation of a drawn tray 21 as depicted in Fig. 4 will be described.

During drawing, the laminate film will be subjected to a stretch of approximately 20 %, putting strict demands on both the aluminium foil, the layer of adhesive and the polymer film in terms of flexibility.

An annealed aluminium alloy of H0 temper (such as e.g. EN-AW 5006) at a foil thickness of 79 µm is employed, comprising by weight ≤ 0.8 % iron, ≤ 0.4 % silicon, ≤ 0.1 % copper, 0.4-0.8 % manganese, 0.8-1.3 % magnesium, ≤ 0.1 % chromium, ≤ 0.25 % zinc and ≤ 0.1 % titanium.

Further, a film of cast polyester, notably polybutylene terephthalate (PBTP) at a thickness of 25 µm, is used for the laminate film in the present embodiment. It presents an elongation at break (ISO 527) of > 500 % (MD as well as TD), while its tensile strength (ISO 527) amount to > 90 MPa (MD) and > 80 MPa (TD).

Alternatively, a film of cast polyamide (PA6.6) at a thickness of 25 µm could have been used for the laminate film. It shows an elongation at break (ISO 527) of 350 % (MD as well as TD) and a tensile stress at yield (ISO 527) of 35 N/mm² (MD) and 36 N/mm² (TD), respectively.

To form the drawn tray 21, the laminate film is pulled over a die and stretched to take on its form. The flow of material is controlled through pressure applied to the laminate film and lubrication applied to the die or the laminate film. If the laminate film moves too easily, wrinkles will occur in the tray. On the other hand, if too much pressure is applied, the laminate will be stretched too thin and/or will break.

The final drawn tray 21 presents a spacing 23, a bottom wall 22, and side walls 28. It possesses a substantially smooth surface as shown in Figure 4. Substantially no or only inconspicuous folds or wrinkles are present in the corners 24. The tray 21 is provided with an upper edge 25 extending in a plane so that a lid can be sealed to said edge by snapping or by applying heat or an adhesive.

### Examples

### Example 1 - Preparation of test items and heat resistance of adhesives

A laminate film according to the present disclosure was prepared by adhesive lamination of a 12 µm corona-treated BoPET film (Petlain BT 1011 from Superfilm) to an 80 µm partially annealed alufoil. Two different adhesives were used:
Sample 1: Polyurethane adhesive based on aromatic isocyanate (Loctite Liofol LA3644-21 MHS and corresponding hardener LA 6055).
Sample 2: Polyurethane adhesive based on aliphatic isocyanate (Novacote NC 560 A and corresponding hardener CA 101).

Both samples were applied in an amount of 2.5 g/m², and the adhesive lamination was carried in accordance with the processing recommendations provided by the producers of the adhesives. From the resulting laminate films, trays were stamped and folded.

The heat stability of the produced laminate films and trays were tested by exposing the laminate films as such as well as the folded trays threequarters full of water to a temperature of 200 °C in an oven for 30 min.

The items produced by use of Sample 1 showed outstanding heat stability (no delamination and discolouring) and also had the flexibility and lamination strength to keep the BoPET film in place when folding the tray. Sample 2 on the other hand showed less heat resistance and the items produced therewith tended to delaminate during heating, meaning that, if removing any tray contents when hot, the film might delaminate. Moreover, some delamination occurred in the corners of the tray during folding thereof.

On this basis, Sample 1 is found to represent a preferred type of adhesive.

### Example 2- Corrosion test

The folded trays prepared in Example 1 were subjected to the following test.

Initially, a 1 % copper sulphate solution was prepared on the basis of 15.6 g of Cu(II)SO₄ and 1000 mL H₂O. Subsequently 50 mL of a 30 % solution of HCl was added to 950 mL of the copper sulphate solution.

The resulting solution was poured into the folded food trays to a level corresponding to that of a prospective foodstuff product packaged in the tray. After 15 min, no brown corrosion pin holes had appeared on the trays, and it was concluded that the applied BoPET film sufficiently protects the aluminium foil.

### Example 3 - test of lamination strength

The laminate films prepared in Example 1 by use of Sample 1 and Sample 2, respectively, were tested with regard to their lamination strengths.

The laminate film prepared with Sample 1 showed a lamination strength of 3.42 N/15 mm (ASTM D 903), whereas Sample 2 had a lamination strength of 3.25 N/15 mm (ASTM D 903). Thus, both Samples provided a satisfactory lamination strength, suggesting that a decisive factor behind the superior results obtained with Sample 1 in the tests of Example 1 seems to be a high flexibility of this adhesive and the laminate produced with it.

## Claims

1. A food tray for being heated in an oven,
wherein said food tray comprises a bottom wall and a number of side walls defining a spacing for a foodstuff product,
wherein the food tray is manufactured from a laminate film, said laminate film comprising, in sequence, an aluminium foil, an adhesive layer, and a polymer film,
wherein the aluminium foil comprises, consists of or essentially consists of aluminium,
wherein the polymer film comprises, consists of, or essentially consists of a thermoplastic polymer having a melting point of at least 150 °C,
wherein the adhesive layer comprises, consists of, or essentially consists of an adhesive, and
wherein the polymer film has been adhesive laminated with the aluminium foil by means of the adhesive layer so that the polymer film adheres to the aluminium foil.

2. A food tray according to claim 1, wherein the polymer film is a polyester film, such as a polyethylene terephthalate film or a polybutylene terephthalate film, or is a polyamide film, a polyethylene naphthalate film, a polyimide film, a thermoplastic copolyester film, or a polymethylpentene film.

3. A food tray according to claim 1 or 2, wherein the aluminium film comprises an inner surface facing said spacing and an outer surface facing the surroundings, and wherein the adhesive layer and the polymer film are provided at or on the inner surface of the aluminium foil so that the polymer film is positioned closer to the spacing than the aluminium foil;

4. A food tray according to claim 1 or 2, wherein the aluminium film comprises an inner surface facing said spacing and an outer surface facing the surroundings, and wherein the adhesive layer and the polymer film are provided at or on the outer surface of the aluminium foil so that the polymer film is positioned farther from the spacing than the aluminium foil.

5. A food tray according to any one of the preceding claims, wherein the food tray has been cold-formed to a shape of the food tray, and/or wherein the food tray is either a folded food tray or is a non-folded, drawn food tray.

6. A food tray according to any one of the preceding claims, wherein said aluminium foil has a thickness of 20-250 µm, 35-200 µm, or 70-90 µm, and wherein the aluminium is optionally annealed, partially annealed or non-annealed.

7. A food tray according to any one of the preceding claims, wherein the polymer film is an oriented polyester film, such as biaxially-oriented polyethylene terephthalate film, and wherein the polymer film has a thickness of 2-50 µm or 6-12 µm.

8. A food tray according to any one of claims 1-6, wherein the polymer film is a polybutylene terephthalate film or a polyamide film, and/or wherein the polymer film has a thickness of 10-100 µm or 20-30 µm.

9. A food tray according to any one of the preceding claims, wherein the adhesive is a 2-component adhesive, and/or wherein the adhesive is applied in a grammage of 1-10 g/m², 1-7 g/m², or 2-3 g/m².

10. A food tray according to any one of the preceding claims, wherein the tray is a folded tray, the aluminium foil is annealed or partially annealed, and the polymer film is or comprises an oriented or bi-oriented polyethylene terephthalate film;
or wherein the tray is a drawn tray, the aluminium foil is annealed, and the polymer film is or comprises a polybutylene terephthalate film or a polyamide film.

11. A food tray according to claim 3, wherein a second adhesive layer, which is optionally similar to the adhesive layer, and a second polymer film, which is optionally similar to the polymer film, are provided at the outer surface of the aluminium foil so that the second polymer film is adapted for being positioned farther from the foodstuff product than the aluminium foil.

12. A laminate film suitable for being formed, such as cold-formed, to a food tray according to any one of the previous claims, said laminate film comprising, in sequence, an aluminium foil, an adhesive layer, and a polymer film,
wherein the aluminium foil consists of or essentially consists of aluminium,
wherein the polymer film comprises, consists of, or essentially consists of a thermoplastic polymer having a melting point of at least 150 °C,
wherein the adhesive layer comprises, consists of, or essentially consists of an adhesive, and
wherein the polymer film has been adhesive laminated with the aluminium foil by means of the adhesive layer so that the polymer film adheres to the aluminium foil.

13. Use of a laminate film according to claim 12 for manufacture of a food tray, wherein the food tray is optionally according to any one of claims 1-11.

14. A method of manufacture of a food tray, the food tray being according to any one of claims 1-12, the method comprising manufacturing or otherwise providing the polymer film and, subsequently, adhesive laminating the polymer film to the aluminium foil by means of the adhesive layer.

15. A method according to claim 14, the method further comprising forming the manufactured laminate film to a shape of the food tray.

16. A method according to claim 14 or 15, further comprising applying a print to a surface of the polymer film before or after the adhesive lamination.

17. A method of manufacture of a laminate film according to claim 12, the method comprising manufacturing or otherwise providing the aluminium film, manufacturing or otherwise providing the polymer film, and adhesive laminating the polymer film to the aluminium foil by means of the adhesive layer.
